# EUROPEAN PATENT APPLICATION

(11) **EP 1 072 365 A1**
(43) Date of publication of application: **31.01.2001**
(21) Application number: 00116425.0
(22) Date of filing: 28.07.2000
(51) Int. Cl.: B25J 9/16, B25J 9/08

(54) **Control system for a modular machine**

(30) Priority: 28.07.1999 JP 21394199
(71) Applicant: YAMAHA HATSUDOKI KABUSHIKI KAISHA, Iwata-shi Shizuoka-ken (JP)
(72) Inventor: Sakaue, Masaya, c/o Yamaha Hatsudoki K. K., Iwata-shi, Shizuoka-ken (JP)
(74) Representative: Grünecker, Kinkeldey, Stockmair & Schwanhäusser Anwaltssozietät

(57) **Abstract**

A machine control system comprising a machine body (2), at least one exchange module (3,4) mounted to said machine body (2) in an interchangeable manner, storage means (3b,4b) provided in said exchange module (3,4) for storing an action library of said exchange (3,4) module, and action decision means (2e) and storage means (2b) provided in said machine body (2). Said action decision means (2e) being adapted to decide actions of the exchange module (3,4) according to said action library and said storage means (2b) being adapted to store said action library, and that when said exchange module (3,4) is replaced, an action library in said machine body (2) is rewritten with the action library of said new exchange module (3,4).

## Description

This invention relates to a control system used for various kinds of interactive machines such as toys, game machines, public welfare and industrial robotic devices, navigation instruments, vending machines and automated teller machines, especially a machine control system according to the preamble of claim 1.

Recently, a pet type robot has been put to practical use which is capable to communicate with users, for example, by growing tamed through learning or expressing emotions by unique movements. For example, JP-A-11-126017 discloses a device in which if a user praises a pet when it barks, the operating condition of barking is relaxed to tame it to an easily-barking pet and on the contrary if the user scolds the pet when it barks, the operating condition of barking is tightened to tame it to an obedient pet, that is, the pet changes its character and tendency of behavior depending on the user's attitude, and the pet is adapted to learn it. In addition, the pet is adapted to be taught several tricks through learning.

However, in such a conventional robot, the number of sensors for detecting information for the robot to learn, as well as the capacity of memories for storing the information, the learning result, or action patterns to be selected, is limited, thereby restricting progress by learning. As a result, it is possible that over time a user might see the action patterns of the robot and lose interest in it.

Accordingly, it is an objective of the present invention to provide a machine control system as indicated above which facilitates to interchange modules with a wide variety of actions and which is capable of continuing growth irrespective of the module exchange.

According to the present invention, this objective is solved for a machine control system as indicated above in that said action decision means being adapted to decide actions of the exchange module according to said action library and said storage means being adapted to store said action library, and that when said exchange module is replaced, an action library in said machine body is rewritten with the action library of said new exchange module.

Therefore, in order to achieve the foregoing object, a machine control system of this invention comprises a machine body; an exchange module mounted to said machine body in an interchangeable manner; storage means provided in said exchange module for storing an action library of said exchange module; and action decision means and storage means provided in said machine body, said action decision means being adapted to decide actions of the exchange module according to said action library and said storage means being adapted to store said action library, wherein when said exchange module is replaced, an action library in said machine body is rewritten with the action library of said exchange module.

Other preferred embodiments of the present invention are laid down in further dependent claims.

In the following, the present invention is explained in greater detail with respect to several embodiments thereof in conjunction with the accompanying drawings, wherein:
Fig. 1 is a general structural diagram showing one embodiment of a machine control system of the invention;
Fig. 2 is a structural diagram of the control sections of Fig. 1;
Fig. 3 is a view illustrating an example of the action library of Fig. 2; and
Fig. 4 is a flowchart illustration the procedure in replacement of modules (devices).

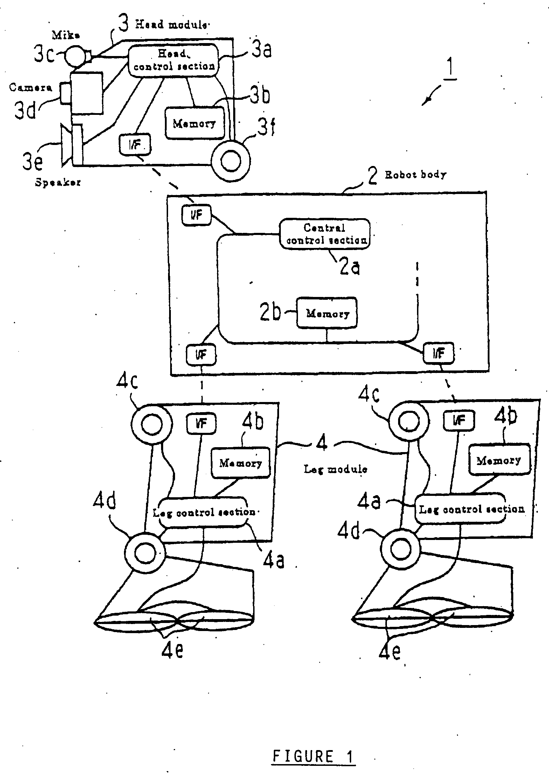

Now, an embodiment of this invention will be described below with reference to the drawings. Fig. 1 is a general structural diagram showing one embodiment of a machine control system according to the invention. While this embodiment is exemplified by an robotic device, this invention can be applied to the various machines described above.

A device constituting a robot 1 comprises a robot body 2, a head module 3 and a plurality of leg modules 4, and the head module 3 and the leg modules 4 are detachably mounted to the robot body 2 in an interchangeable manner. The exchange modules are not limited to these elements, but various modules such as a hand module, tail module and wing module are considered applicable.

The robot body 2 has a central control section 2a, to which are connected a memory (storage means) 2b and an interface I/F. The head module 3 has a head control section 3a, to which are connected a memory (storage means) 3b and an interface I/F, and also connected auditory detection means or a mike 3c, visual detection means or a camera 3d, an auditory emotion-expressing (cry, etc) device or a speaker 3e, and a neck joint drive motor 3f. Each leg module has a leg control section 4a, to which are connected a memory (storage means) 4b and an interface I/F, and also connected a leg joint drive motor 4c, an **ancle** joint drive motor 4d, and tactile detection means or a sensor 4e. The interfaces of the robot body 2 are each interconnected with interfaces I/F of the respective modules 3, 4.

Multiple kinds of exchange modules are provided for the head and the leg modules 3, 4, and can be exchanged as appropriate by request of the user. For example, head modules 3 are provided having actuators representing facial expression such as movement of eyes, mouth, eyebrows or ears, or having a display showing facial expression, while leg modules 4 are provided of a type capable of walking by legs or running on caterpillars. Regarding the form, exchange modules are provided in the shape of animals such as dogs and cats or other organisms real or virtual, or further, similar to human beings. In memories 3b, 4b of the modules 3, 4 are stored basic programs for operating the respective modules.

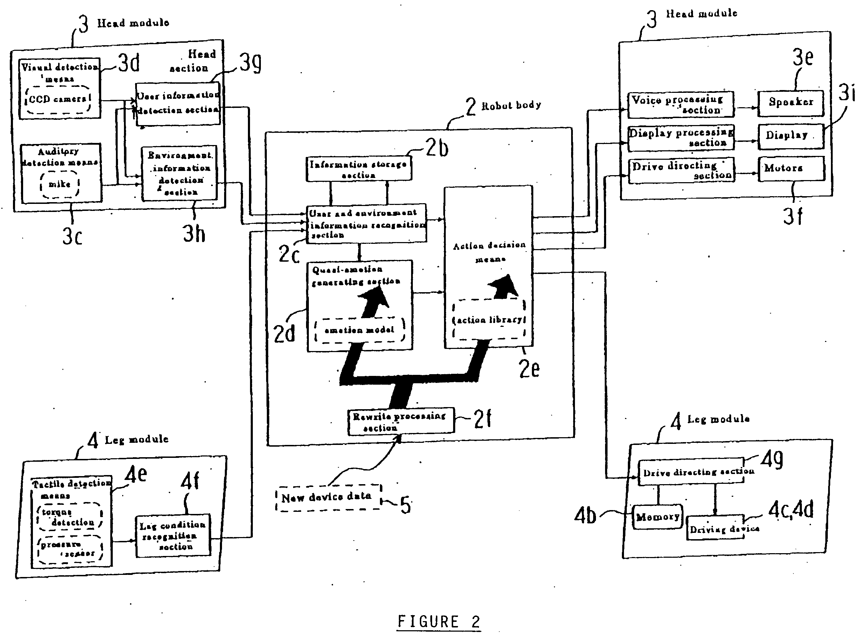

Fig. 2 is a structural diagram of the control sections of Fig. 1. Signals detected by visual detection means (CCD camera) 3d and auditory detection means (mike) 3c provided in the head module 3 are sent to a user information detection section 3g and an environment information detection section 3h. The user information detection section 3g detects user's facial expression, behavior and voices while the environment information detection section 3h detects external environments (lightness of the room, obstacles, etc) observed by the robot, and these information data are sent to a user and environment information recognition section 2c. Signals detected by tactile detection means (torque or pressure sensor) provided in the leg module 4 are sent to a leg condition recognition section 4f, where contact against obstacles is detected, information of which is sent to the user and environment information recognition section 2c.

The information in the user and environment information recognition section 2c is sent to a quasi-emotion generating section 2d, where quasi-emotions of the robot are generated according to emotion models stored. The emotion models are formulas used for obtaining parameters expressing emotions of the robot, such as anger, sorrow, pleasure, fear, hatred, fatigue, hunger and sleepiness, and the emotions of the robot are generated in response to user information (user's temper, directions, etc) and environment information (lightness of the room, etc). For example, the robot expresses an emotion of "pleasure" when the user returns home and an emotion of "anger" when a person other than the user comes in. Acts of the user praising or scolding the robot on these occasions cause the emotions of the robot to be changed and allows the robot to grow. The emotion models are prepared such that the robot responds childish when it is a baby and responds matured as it grows. The growing character and behavior of the robot are stored in the information storage section 2b, and processed as information of learning. It is possible to teach the robot tricks such as "Sit Down" or "Hand Up."

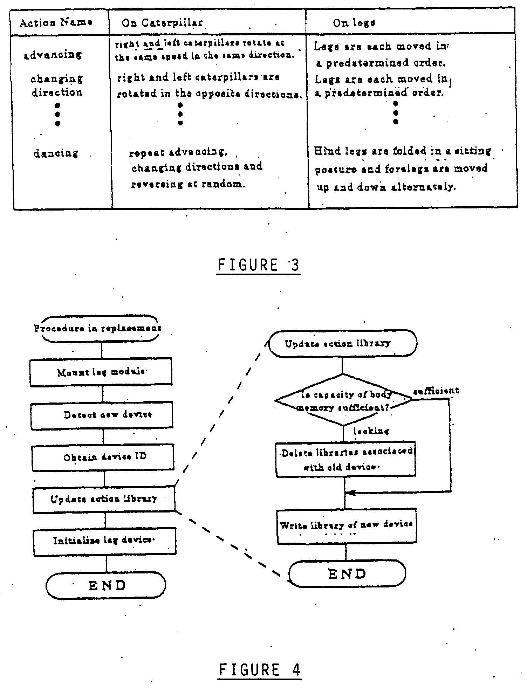

Information in the user and environment information recognition section 2c and the quasi-emotion generating section 2d is sent to action decision means 2e, where actions of the robot are decided referring to an action library. The emotion library contains data of sequential operations and is stored in the memory of each module. Fig. 3 is a view of an example of the action library, showing action patterns of the leg module 4 moving on caterpillars and walking by legs. For example, where the action name is "advancing," the action patterns are such that "right and left caterpillars rotate at the same speed in the same direction" in the case of caterpillar and "legs are each moved in a predetermined order" in the case of legs, while where the action name is "changing direction," the action patterns are such that "right and left caterpillars are rotated in the opposite directions" in the case of caterpillars and "legs are each moved in a predetermined order" in the case of legs, and further, action patterns are stored such as "repeat advancing, changing directions and reversing at random" in the case of caterpillars and "fold hind legs in a sitting posture and move forelegs up and down alternately" in the case of legs.

Information decided in the action decision means 2e is sent to the head module 3, and processed in a voice processing section, a display processing section and a drive directing section with the result that cries are output, for example, from the speaker 3e, facial expression is output, for example, from the display 3i, and motors 3f are driven to perform the decided action patterns such as shaking-head movement and the like. The information decided in the action decision means 2e is sent to the leg module 4, processed in a drive directing section 4g, and the driving devices 4c, 4d are driven to perform the action patterns illustrated in Fig .3. At the same time, the character and the behavior of the robot which grows through learning are stored in the memory 4b.

What characterizes this invention is that when the modules 3, 4 are replaced, new device data (new data or grown-up data) 5 stored in the memories 3b, 4b of the modules is sent to a rewrite processing section 2f of the robot body 2, where the existing emotion models and action libraries are rewritten.

Fig. 4 is a flow diagram illustrating the procedure in replacement of modules (devices). When leg mounting is performed, the leg module is detected as a new device, a device ID is obtained, an action library is updated, and then the leg device is initialized. In the procedure of updating the action library, it is determined whether or not the capacity of the memory of the robot body is sufficient, and if the capacity is lacking, the library of the new device is written in after deletion of libraries associated with the old device. If the capacity is sufficient, the library of the new device is written in without any additional procedure.

In this way, not only different behavior is expected after replacement of modules, but also growth of the old module can be started from the point of previous learning, when mounted again. For example, mounting long legs enables change in actions, for example, from dog-like movement to horse-like movement. Further, to the memories 3b, 4b on the modules may be added information, such as "character" or new action pattern information, which serves as key information in developing new behavior when the robot proceeds with learning to grow, and areas in the memory 2b of the robot body 2 which has not been used as a result of learning, may be overwritten by the information. For example, it may be possible that the learning result of the movement of legs is written in the memory 4b of the leg module 4, and a leg module 4 which has grown in one robot body 2 is incorporated in another robot body, for propagation of the character. Furthermore, by way of amusement, a stronger robot may be raised by exchanging an arm or the like for a more capable module and further, through learning by competition.

Although a preferable embodiment has been described above, this invention is not limited to this embodiment, but various changes may be made. For example, it is possible that a robotic device is operated as an electric robot on a computer screen, and this invention may be applied to various kinds of man-machine interfaces for toys, game machines, vehicle instruments such as navigation devices, public welfare apparatuses such as nursing goods and industrial equipment.

As is clear from the foregoing, according to the invention, a robot can be provided which grows larger in appearance every time a new module is mounted on, as well as a machine such as a robot or the like whose growth can be started from the point of previous learning when an old module is mounted again, and in which a user will not lose interest over time.

## Claims

1. A machine control system comprising:
a machine body (2);
at least one exchange module (3,4) mounted to said machine body (2) in an interchangeable manner;
storage means (3b,4b) provided in said exchange module (3,4) for storing an action library of said exchange module (3,4); and
action decision means (2e) and storage means (2b) provided in said machine body (2),
**characterized in that**
said action decision means (2e) being adapted to decide actions of the exchange module (3,4) according to said action library and said storage means (2b) being adapted to store said action library;
and that when said exchange module (3,4) is replaced, an action library in said machine body (2) is rewritten with the action library of said new exchange module (3,4).

2. The machine control system according to claim 1, **characterized in that** said machine body (2) is a robotic device (1), and said exchange module consists of a head module (3) and a leg module (4).

3. The machine control system according to claim 2, **characterized in that** said head module (3) is provided with detection means (3g,3h) for detecting user information and environment information.

4. The machine control system according to claim 3, **characterized in that** emotion generating means (2d) is provided for producing emotions of the robot (1) based on said user information and environment information.

5. The machine control system according to one of the preceding claims 1 to 4, **characterized in that** said system is adapted to learn actions decided by said action decision means (2e) and the learning result is stored in storage means (2b,3b,4b) of the machine body (2) and the exchange module (3,4).

6. The machine control system according to one of the preceding claims 1 to 5, **characterized by** a central control section (2a) connected with said storage means (2b) of said action decision means (2e).

7. The machine control system according to one of the preceding claims 1 to 6, **characterized in that** said head module (3) comprising a head control section (3a) to which are connected said storing means (3b) and an interlace (I/F) and also are connected auditory detection means (3c), visual detection means (3d) and an auditory emotion-expressing means (3e).

8. The machine control system according to one of the preceding claims 1 to 7, **characterized in that** said modules (3,4) comprising memories (3b,4b) containing basic programs for operating the respective modules (3,4).

9. The machine control system according to one of the preceding claims 1 to 8, **characterized in that** said head module (3) comprising a user information detection section (3g) and an environment information detection section (3h).

10. The machine control system according to one of the preceding claims 1 to 9, **characterized in that** said system is adapted to decide whether capacity of the memory (2b) of the robot body (2) is sufficient or not and, if not, the system is adapted to overwrite the new information or data, respectively.

11. The machine control system according to one of the preceding claims 1 to 10, **characterized in that** said system is adapted to control an electric robot on a computer screen, machine interfaces for toys, game machines, vehicle instruments (for example navigation devices) or public welfare apparatuses, respectively.
